# FASCICULE DE BREVET EUROPEEN

(11) **EP 4 632 689 B1**
(45) Date de publication et mention de la délivrance du brevet: **19.08.2026**
(21) Numéro de dépôt: 25164981.0
(22) Date de dépôt: 20.03.2025
(51) Int. Cl.: G06V 10/82, G06N 3/045, G06N 3/08

(54) **MÉTHODE D'ENTRAINEMENT D'UN MODÈLE D'APPRENTISSAGE MACHINE POUR LA DÉCOUVERTE D'OBJETS DANS UNE SÉQUENCE D'IMAGES**
VERFAHREN ZUM TRAINIEREN EINES MASCHINENLERNMODELLS ZUR ENTDECKUNG VON OBJEKTEN IN EINER BILDSEQUENZ
METHOD FOR TRAINING A MACHINE LEARNING MODEL FOR DISCOVERING OBJECTS IN AN IMAGE SEQUENCE

(30) Priorité: 08.04.2024 FR 2403608
(43) Date de publication de la demande: 15.10.2025
(73) Titulaire: Commissariat à l'Energie Atomique et aux Energies Alternatives, 75015 Paris (FR)
(72) Inventeur: KARA, Sandra, 91191 GIF-SUR-YVETTE Cedex (FR); AMMAR, Hejer, 91191 GIF-SUR-YVETTE Cedex (FR); CHABOT, Florian, 91191 GIF-SUR-YVETTE Cedex (FR); PHAM, Quoc-Cuong, 91191 GIF-SUR-YVETTE Cedex (FR); DENIZE, Julien, 91191 GIF-SUR-YVETTE Cedex (FR)
(74) Mandataire: Atout PI Laplace

(56) Documents cités:
- US-A1- 2023 252 796
- SANDRA KARA ET AL: "The Background Also Matters: Background-Aware Motion-Guided Objects Discovery", ARXIV.ORG, CORNELL UNIVERSITY LIBRARY, 201 OLIN LIBRARY CORNELL UNIVERSITY ITHACA, NY 14853, 5 November 2023 (2023-11-05), XP091653064

## Description

L'invention concerne le domaine de la découverte d'objets dans une séquence d'images. Il s'agit d'une tâche de vision par ordinateur qui vise à localiser les objets présents dans une image en produisant des masques d'objets pour chaque objet localisé. Un masque d'objet est une image binaire comprenant des valeurs à '1' aux emplacements des pixels de l'objet et des valeurs à '0' ailleurs. Il y a autant de masques que d'objets présents dans la scène capturée par la séquence d'images.

L'invention porte sur une nouvelle méthode de découverte d'objets impliquant la mise en œuvre d'un modèle d'apprentissage machine particulier. L'invention porte notamment sur l'entrainement de ce modèle pour réaliser une tâche de découverte d'objets à partir d'une séquence d'images donnée.

L'invention s'applique dans différents domaines qui nécessitent la localisation d'objets dans une séquence d'image, en particulier mais pas exclusivement : les systèmes de vision pour la conduite autonome, l'exploration d'environnements inconnus, les systèmes de vidéo-surveillance, la segmentation de cellules en activité dans des données médicales ou encore les systèmes de vision auto-apprenants.

Un problème général à résoudre dans le domaine de la découverte d'objets consiste à réaliser cette tâche de façon non supervisée contrairement à la tâche de détection d'objets qui nécessite des données d'apprentissages annotées. Un avantage associé à un entrainement non supervisé réside dans l'économie faite sur l'obtention de données labellisées qui sont le plus souvent réalisées par un opérateur.

Cependant, l'absence de données annotées entraine à l'inverse une plus grande difficulté à réaliser l'apprentissage. L'un des challenges rencontrés pour la découverte d'objets de façon non supervisée est le manque de définition claire de ce qu'est un objet.

Les références [1],[2] décrivent des méthodes de découverte d'objets qui visent à localiser des objets caractérisés par leur mouvement. Autrement dit, ces méthodes sont orientées vers la découverte d'objets mobiles.

Les méthodes décrites dans les références [1] et [2] proposent de remplacer l'annotation humaine des données d'apprentissage par une exploitation de l'information de mouvement des objets au sein de la séquence d'images.

Le choix de l'information de mouvement présente l'avantage que cette information peut être estimée automatiquement et sans intervention (supervision) humaine. Ces approches proposent un modèle de découverte d'objets intégré dans un pipeline composé de deux phases principales.

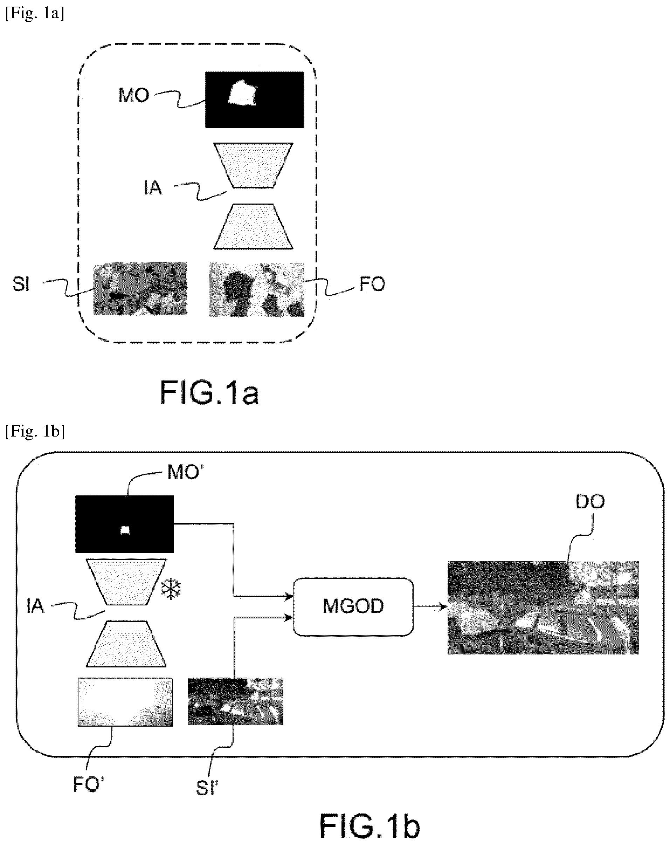

La figure 1a illustre la première phase qui consiste à apprendre à générer un ensemble de masques d'objets binaires MO à partir d'images SI et de cartes de flux optique associée FO. Cette tâche est réalisée au moyen d'un modèle d'apprentissage machine IA. La carte de flux optique correspond à une carte de mouvement dans laquelle les valeurs de pixels décrivent le déplacement des objets mobiles entre deux images consécutives. Le modèle IA est entrainé à partir de données synthétiques, sans nécessité d'annotations humaines.

La figure 1b illustre la seconde phase qui consiste ensuite à appliquer le modèle entrainé IA sur des données réelles SI' accompagnées d'une carte de flux optique FO' pour générer des masques d'objets MO' qui correspondent à des pseudo-labels car ils peuvent être bruités et/ou incomplets. Le bruit peut provenir de l'imperfection de la carte de mouvement et se manifeste principalement par la présence de segments aléatoires occupant l'arrière-plan de l'image. Par ailleurs, le caractère incomplet est lié à l'utilisation même de l'information de mouvement, entraînant l'absence d'objets statiques dans ces pseudo-labels.

Un autre modèle MGOD est ensuite entrainé pour réaliser la découverte d'objets DO à partir de la séquence d'image SI' et des pseudo-labels MO'. L'approche décrite dans la référence [3] est basée sur une architecture qui implémente un mécanisme d'attention appliqué à des slots. Chaque slot est associé à une carte d'attention et l'apprentissage du modèle force le partage des régions de l'image d'entrée entre plusieurs cartes d'attention dont les valeurs varient entre 0 et 1. Chaque carte d'attention active une région spécifique (les valeurs des pixels de cette région sont alors proches de 1) et atténue le reste de l'image (pixels proches de 0). On dit alors que l'attention du modèle est orientée vers cette région activée.

Le modèle MGOD est entrainé en intégrant les pseudo-labels d'objets mobiles MO' dans l'architecture d'apprentissage de la manière suivante: certaines cartes parmi les K cartes d'attention sont supervisées (par une fonction de perte appropriée) pour contenir les segments mobiles, tandis que les autres cartes d'attention sont laissées libres sans supervision. Le comportement du modèle observé est qu'au niveau des cartes supervisées apparaissent des objets mobiles, et au niveau des cartes sans supervision apparaissent soit des objets statiques qui leurs sont visuellement similaires, soit des segments aléatoires (bruit).

La méthode décrite aux figures 1a et 1b présente notamment deux limitations.

Un premier problème est le manque de distinction entre les segments aléatoires correspondant à du bruit et les segments utiles correspondant à des objets. Cela résulte de l'absence de supervision de l'entrainement dans la découverte d'objets. Ainsi, ces méthodes sont peu robustes au bruit, en particulier lié au mouvement de la caméra.

Un second problème est que cette méthode exploite principalement l'information de mouvement ce qui limite fortement la localisation des objets statiques dans la séquence. L'extension 'objet mobile vers objet statique' offerte par l'architecture dite « slot-attention » proposée notamment dans la référence [2] fonctionne en redirigeant l'attention du modèle vers des objets qui ressemblent à ceux déjà connus en mouvement. Néanmoins, cette méthode a ses limites. Elle ne garantit pas que le modèle détectera une quantité suffisante d'objets statiques, ni même qu'il les détectera de façon fiable. La détection dépend entièrement de la capacité du modèle à juger si un nouvel objet statique ressemble suffisamment aux objets mobiles qu'il connaît déjà.

La référence [4] adresse, dans une approche plus récente, la première problématique précitée en proposant une composante de gestion du bruit dans l'arrière-plan de l'image. Cette composante consiste à apprendre la séparation entre d'une part tous les objets de la scène qui sont activés dans une carte dédiée au premier plan de l'image et notée *W_{fg},* et d'autre part le fond de l'image qui ne contient pas d'objets d'intérêt ( c-à-d les objets capables de bouger). Cet arrière-plan est activé dans une carte notée *W_{bg}* parmi les *K* cartes d'attentions. En plaçant l'arrière-plan dans cette carte et puisque toutes les cartes d'attention sont 4 complémentaires entre elles, ceci empêche les segments aléatoires d'apparaître dans les autres K - 1 cartes dédiées aux objets.

Cette approche permet cependant uniquement une gestion partielle du bruit dans l'arrière-plan de l'image. En effet, le bruit qui apparaît dans l'arrière-plan de l'image, parmi les sorties du modèle, a principalement deux causes: la première cause est liée à l'architecture « slot-attention », et au fait que les cartes d'attention libres peuvent capturer du bruit, et la seconde cause est liée aux pseudo-labels d'entrée qui, s'ils sont bruités, propagent ce bruit vers les sorties du modèle. L'approche de l'article [4] traite la première cause en introduisant une contrainte supplémentaire qui empêche les cartes d'attention vides de capturer du bruit. Cependant, la seconde cause de ce problème n'est pas traitée.

US 2023/252796 A1 divulgue une méthode d'apprentissage de représentation de caractéristiques compositionnelles pour la compréhension vidéo est décrite. La méthode comprend le traitement individuel d'une séquence d'images vidéo reçue en entrée d'un réseau de cartes de caractéristiques afin de générer une pluralité de cartes de caractéristiques. La méthode comprend également l'association de la pluralité de cartes de caractéristiques à un ensemble fixe de variables d'emplacement au moyen d'un modèle d'attention selon un signal de segmentation du mouvement. La méthode comprend en outre la combinaison d'états d'emplacement correspondant à l'ensemble fixe de variables d'emplacement en une carte de caractéristiques combinée. La méthode comprend aussi le décodage de la carte de caractéristiques combinée pour former une séquence reconstruite d'images vidéo, dans laquelle les objets découverts dans la séquence reconstruite d'images vidéo sont identifiés.

L'invention vise à pallier aux limitations de l'art antérieur au moyen d'une méthode qui apporte une solution aux deux problèmes discutés ci-dessus.

L'invention propose d'introduire un filtrage automatique et robuste des segments de bruit contenus dans les pseudo-labels en entrée du modèle à partir d'un calcul de score de confiance.

L'invention propose également d'introduire une approche d'apprentissage par distillation pour intégrer des objets statiques dans la supervision des cartes d'attention du modèle. Ainsi, même lorsque les pseudo-labels sont issus du mouvement et ne contiennent donc pas les objets statiques, ils sont complétés en introduisant une seconde source de supervision sous la forme d'un modèle maitre et via un apprentissage par distillation. Le résultat de cette composante se traduit par une bien meilleure localisation des objets, notamment les objets statiques.

La méthode de découverte d'objets dans une séquence d'images proposée est capable de filtrer les pseudo-labels d'entrée issus du mouvement et de s'améliorer automatiquement au fil de l'entrainement, par ré-intégration de ses propres résultats.

L'invention permet de résoudre un frein technique lié au bruit présent dans les entrées des modèles de découverte d'objets de l'art antérieur.

En particulier dans les architectures d'entrainement par distillation, le bruit peut être propagé à la fois dans les modèles maitre et élève. Dans ce type de scénario, la réussite ou non de la distillation dépend de la quantité de bruit présent : si les segments de bruit sont minoritaires parmi les pseudo-labels d'entrée, le modèle est capable de les ignorer. Cette condition n'est pas nécessairement vérifiée dans des applications réelles où le bruit peut atteindre des niveaux importants, conduisant à l'échec de la distillation.

Par ailleurs, ce frein technique s'avère plus prononcé lorsque le modèle de base repose sur l'architecture dite 'slot attention'. En effet, cette architecture est particulièrement intéressante pour les méthodes de l'art antérieur ci-dessus référencée car elle permet d'étendre l'attention vers des objets statiques, absents dans l'information de mouvement. Toutefois, l'architecture 'slot attention' amplifie aussi le bruit reçu en entrée. En effet, le même mécanisme qui permet l'extension 'objets mobiles vers objets statiques' est responsable de l'amplification du bruit reçu en entrée. Par exemple, le modèle peut générer, au niveau des cartes d'attention libres, d'autres segments aléatoires similaires au bruit d'entrée. Ce bruit devient donc critique et freine le développement de la distillation appliquée à la découverte d'objets par un mécanisme 'slot attention'.

L'invention a pour objet une méthode, mise en œuvre par ordinateur, d'entrainement d'un modèle automatique de découverte d'objets dans une séquence d'images d'entrée, le modèle comprenant :
- un encodeur pour encoder chaque image en un premier vecteur de caractéristiques,
- un module d'attention configuré pour transformer le premier vecteur de caractéristiques en une pluralité de vecteurs de caractéristiques appelé slots, l'état d'un slot étant déterminé à partir d'un calcul de similarité entre le premier vecteur de caractéristiques et chaque slot dans son état courant, chaque calcul de similarité définissant une carte d'attention,
- un décodeur pour décoder l'ensemble des slots de manière à reconstruire une séquence d'images correspondant à la séquence d'images d'entrée,
- l'apprentissage des cartes d'attention étant supervisé par un ensemble de masques binaires de découverte d'objets mobiles produits par une source externe, dits pseudo-labels, de sorte que chaque carte d'attention est activée dans une zone correspondant à un objet distinct contenu dans les pseudo-labels, une carte d'attention supplémentaire est activée dans une zone correspondant à l'arrière-plan de l'image,
- les pseudo-labels étant filtrés au moyen des étapes de :
   i. déterminer une carte d'attention du premier plan de l'image comme étant le négatif de la carte d'attention supplémentaire,
   ii. calculer un score de confiance à partir de la moyenne des valeurs de la carte d'attention du premier plan de l'image aux positions de chaque objet mobile présent dans un pseudo-label,
   iii. filtrer les objets mobiles des pseudo-labels pour lesquels le score de confiance est inférieur à un seuil prédéfini,

Selon un aspect particulier de l'invention, la carte d'attention du premier plan de l'image est déterminée à partir de la carte d'attention de l'arrière-plan de l'image du module d'attention du modèle.

Selon un aspect particulier de l'invention, ledit modèle est un modèle élève entrainé au moins partiellement via un mécanisme de transfert d'apprentissage par distillation depuis un modèle maitre, le modèle maitre comprenant un encodeur et un module d'attention, la carte d'attention du premier plan de l'image du modèle élève étant déterminée à partir de la carte d'attention de l'arrière-plan de l'image du module d'attention du modèle maitre.

Selon un aspect particulier de l'invention, l'apprentissage des cartes d'attention du modèle élève est supervisé par les cartes d'attention du modèle maitre de sorte que chaque carte d'attention est activée dans une zone correspondant à un objet distinct découvert dans les cartes d'attention du modèle maitre.

Selon un aspect particulier de l'invention, l'apprentissage des cartes d'attention du modèle élève comprend les étapes de :
- Binariser chaque carte d'attention du modèle maitre,
- Déterminer l'ensemble des régions connexes dans l'ensemble des cartes d'attention binarisées, chaque région connexe correspondant à un objet distinct découvert

Selon un aspect particulier de l'invention, l'apprentissage des cartes d'attention du modèle élève comprend en outre les étapes de :
- Calculer un score de confiance pour chaque objet distinct découvert comme étant égal à la valeur moyenne des activations dudit objet dans chaque carte d'attention du modèle maitre,
- Filtrer les objets dont le score de confiance est inférieur à un seuil prédéterminé

Selon un aspect particulier de l'invention, la supervision des cartes d'attention du modèle élève est au moins réalisée au moyen d'une première fonction de perte d'entropie croisée appliquée entre les cartes d'attention du modèle élève et les objets déterminés à partir des cartes d'attention du modèle maitre pondérés par leur score de confiance.

Selon un aspect particulier de l'invention, la supervision des cartes d'attention du modèle est au moins réalisée au moyen d'une seconde fonction de perte d'entropie croisée appliquée entre les cartes d'attention du modèle et les objets des pseudo-labels pondérés par leur score de confiance.

Selon un aspect particulier de l'invention, les pseudo-labels sont obtenus à partir de la séquence d'images et d'une séquence de flux optique associée.

L'invention a aussi pour objet une méthode, mise en œuvre par ordinateur de découverte d'objets dans une séquence d'images comprenant les étapes de :
- Recevoir une séquence d'images,
- Exécuter le modèle automatique de découverte d'objets entrainé au moyen de la méthode selon l'invention pour la séquence d'images de manière à générer au moins un masque de localisation d'un objet dans la séquence d'images, chaque masque de localisation étant obtenu à partir d'une carte d'attention.

L'invention a aussi pour objet un programme d'ordinateur comportant des instructions pour l'exécution de la méthode selon l'invention, lorsque le programme est exécuté par un processeur.

L'invention a aussi pour objet un support d'enregistrement lisible par un processeur sur lequel est enregistré un programme comportant des instructions pour l'exécution de la méthode selon l'invention, lorsque le programme est exécuté par un processeur.

D'autres caractéristiques et avantages de la présente invention apparaîtront mieux à la lecture de la description qui suit en relation aux dessins annexés suivants.
[Fig. 1a] représente un schéma illustrant une méthode d'apprentissage automatique de masques d'objets à partir d'une information de mouvement selon l'art antérieur,
[Fig. 1b] représente un schéma illustrant une méthode d'apprentissage automatique de découverte d'objets à partir de masques d'objets obtenus via la méthode de la figure 1a,
[Fig. 2] représente un schéma illustrant la mise en œuvre d'une méthode d'apprentissage automatique de découverte d'objets selon un premier mode de réalisation de l'invention,
[Fig. 3] représente un schéma illustrant une étape de filtrage de pseudo-labels dans la méthode de la figure 2,
[Fig. 4] représente un organigramme détaillant la mise en œuvre de l'étape de filtrage,
[Fig. 5] représente un schéma illustrant la mise en œuvre d'une méthode d'apprentissage automatique de découverte d'objets selon un deuxième mode de réalisation de l'invention,
[Fig. 6] représente un schéma illustrant la mise en œuvre d'une méthode d'apprentissage automatique de découverte d'objets selon un troisième mode de réalisation de l'invention,
[Fig. 7] représente un organigramme détaillant la mise en œuvre d'une étape de supervision d'un modèle élève par un modèle maitre, selon le troisième mode de réalisation de l'invention.

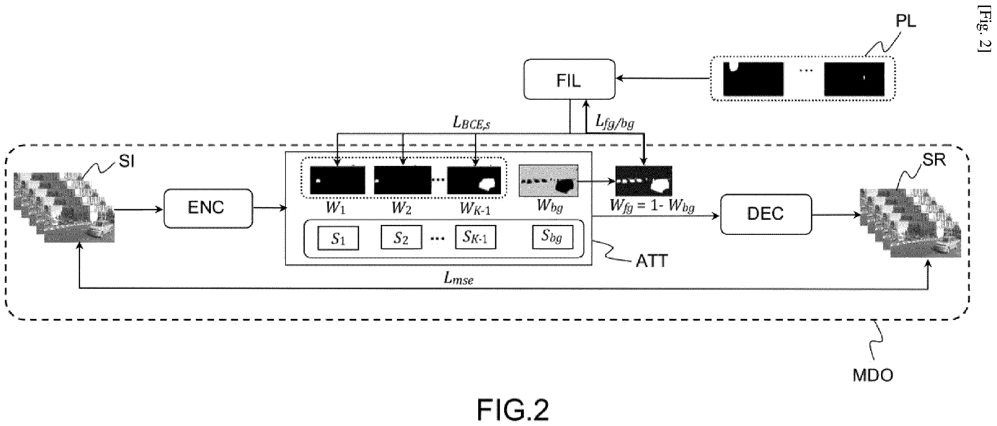

La figure 2, représente, sur un schéma, la méthode d'entrainement d'un modèle d'apprentissage automatique de découverte d'objets selon un premier mode de réalisation de l'invention.

Ce premier mode de réalisation vise à résoudre le problème spécifique de la présence du bruit dans les pseudo-labels utilisés pour l'apprentissage.

Le modèle MDO reçoit à cet effet en entrée une séquence d'images SI et un ensemble de pseudo-labels PL qui correspondent à des masques binaires d'objets obtenus, par exemple, au moyen de la méthode décrite à la figure 1a. Ces masques sont imparfaits du fait de la présence de bruit. Ils visent à étiqueter les objets mobiles dans la scène.

Sans sortir du cadre de l'invention, les pseudo-labels PL peuvent être obtenus par d'autres méthodes, par exemple des annotations humaines ou via d'autres types d'algorithmes de découverte d'objets.

Chaque pseudo-label est censé correspondre à un objet mobile présent dans la séquence d'image SI. Pour les raisons invoquées précédemment, certains masques peuvent correspondre à du bruit et non à des objets.

Le modèle de base MDO employé correspond à celui décrit dans les références [1],[2] et [3] qui est basé sur une architecture de type « slot attention ». Plus précisément, ce modèle comprend un encodeur ENC configuré pour encoder chaque image dans un espace de représentations latent de sorte à générer un vecteur de caractéristiques spatio-temporelles descriptives du contenu de la séquence. L'encodeur ENC est par exemple un réseau neuronal artificiel tel qu'un réseau neuronal résiduel ou tout autre modèle d'apprentissage machine apte à encoder une séquence d'images en un ensemble de caractéristiques spatio-temporelles.

Le modèle MDO comprend également un module d'attention ATT qui vise à transformer un ensemble de N caractéristiques spatio-temporelles obtenues en sortie de l'encodeur ENC en K vecteurs appelés « slots » dont la dimension est un hyper-paramètre de l'architecture. Le module d'attention ATT est entrainé pour que chaque slot décrive un objet ou plus généralement une zone d'intérêt différente de la séquence d'images.

Le module d'attention ATT implémente un mécanisme itératif d'attention qui vise à apprendre une fonction de transformation ou mapping des N caractéristiques en K slots, les coefficients de cette fonction peuvent être représentés sous la forme d'une carte d'attention dont les valeurs normalisées varient entre 0 et 1. Chaque carte d'attention active une zone différente de l'image.

Sur la figure 2 on a représenté K-1 slots S₁,...S_{K-1} associés à K-1 objets de la scène et un slot supplémentaire S_{bg} correspondant à l'arrière-plan de la scène. A chaque slot est associé une carte d'attention W₁,...W_{K-1},W_{bg}. Le mécanisme itératif d'attention visant à entrainer le module d'attention ATT est décrit plus en détail dans la référence [3].

Les slots S₁,...S_{K-1}, S_{bg} obtenus à l'itération finale sont ensuite fournis à un décodeur DEC qui réalise une opération de décodage des slots pour reconstruire une séquence d'images SR. Le décodeur DEC est par exemple un réseau de neurones convolutifs.

Le modèle MDO est entrainé de sorte à minimiser une fonction de perte L_{MSE} basé sur un critère de distance ou d'erreur entre la séquence reconstruite SR et la séquence d'entrée SI.

Par ailleurs, les pseudo-labels PL sont utilisés pour superviser certaines cartes parmi les K-1 cartes d'attention W₁,...W_{K-1} de sorte que chaque carte d'attention soit orientée vers un objet différent parmi l'ensemble des masques d'objets que constituent les pseudo-labels. Ce principe, introduit dans les références [1] et [2], consiste à superviser l'entrainement du modèle par une source externe caractérisant le mouvement dans la scène, c'est-à-dire les objets mobiles. Les cartes à superviser sont sélectionnées via un algorithme de mise en correspondance entre les pseudo-labels et le contenu des cartes d'attention. Ce processus est décrit plus en détails dans la référence [1] et vise à orienter chaque carte d'attention supervisée vers un objet différent parmi l'ensemble des masques d'objets que constituent les pseudo-labels.

Ainsi, le module d'attention ATT est entrainé à générer K-1 cartes d'attention qui sont orientées vers des objets distincts et une carte d'attention orientée vers le fond de l'image. A partir de chaque carte d'attention obtenue pour un objet, un masque de localisation de l'objet peut être dérivé en binarisant les valeurs d'activation de la carte.

L'invention vise à encore améliorer l'entrainement supervisé du modèle MDO en ajoutant une fonction de filtrage FIL des pseudo-labels et en associant un score de confiance à chaque objet identifié dans les pseudo-labels dans la supervision des cartes d'attention.

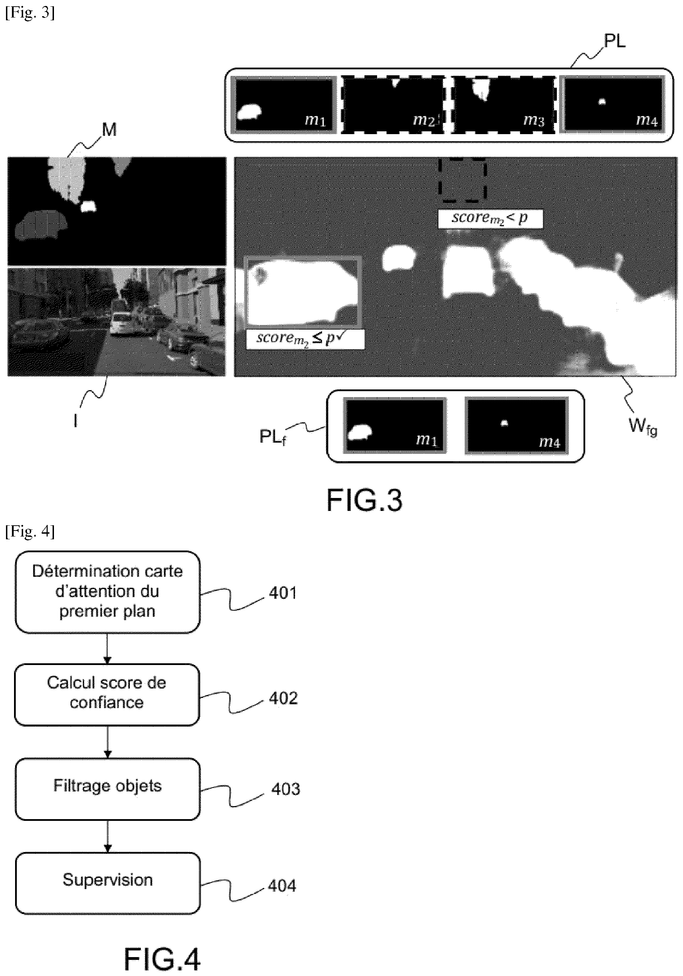

Les figures 3 et 4 illustrent la mise en œuvre de cette fonction de filtrage FIL qui comprend plusieurs étapes successives.

A l'étape 401, on détermine tout d'abord une carte d'attention du premier plan de l'image W_{fg} à partir de la carte d'attention de l'arrière-plan de l'image W_{bg} comme le négatif de celle-ci : W_{fg}=1- W_{bg}. La carte d'attention du premier plan contient théoriquement tous les objets présents dans l'image à l'inverse de la carte d'attention de l'arrière plan qui ne contient que le fond de l'image.

Un exemple de carte d'attention du premier-plan W_{fg} est donné à la figure 3 pour une image I.

Sur la figure 3 on a également représenté un exemple de pseudo-labels PL comprenant quatre masques d'objets binaires m₁, m₂, m₃, m₄. Les pseudo-labels étant sous forme binaires, ils ne permettent pas de distinguer un objet d'un segment de bruit.

A l'étape 402 de la méthode, on calcule alors un score de confiance pour chacun des masques à partir de la carte d'attention du premier plan de l'image W_{fg} qui est composée de valeurs non binaires, typiquement qui varient entre 0 et 1, et qui reflète le contenu sémantique de l'image. Autrement dit, les objets identifiés dans les pseudo-labels provenant d'une source externe se retrouvent dans la carte d'attention W_{fg} qui est censée contenir une représentation de tous les objets de la scène.

Pour chaque masque mᵢ, i variant de 1 à M le nombre de pseudo-labels, le score de confiance est calculé comme étant la moyenne des activations de la carte d'attention W_{fg} aux positions spatiales de la carte correspondant aux positions spatiales du masque pour lesquels le masque a une valeur à 1.

Le score de confiance peut être représenté par la formule suivante :
${score}_{mi} = \frac{1}{{\sum }_{j = 1}^{N} {m}_{i} \left(j\right)} {\sum }_{j = 1}^{N} {W}_{fg} \left(j\right) ⊙ {m}_{i} \left(j\right)$

⊙ désigne l'opérateur produit terme à terme de deux matrices.

L'indice j varie de 1 au nombre de pixels N dans la carte d'activation W_{fg} qui est de même dimension que chaque masque d'objet mᵢ.

Le score de confiance peut être calculé pour chaque objet car la carte d'attention W_{fg} contient des activations pour tous les pixels de la scène puisque cette carte est calculée à partir de la scène reçue en entrée.

A l'étape 403, on compare le score de confiance calculé à un seuil prédéfini p dont la valeur est prise proche de 1 pour filtrer efficacement les prédictions les moins fiables, par exemple à une valeur de 0.9. Les masques pour lesquels le score de confiance est en dessous de ce seuil sont supprimés de l'ensemble des pseudo-labels comme illustré sur l'exemple de la figure 3. Sur cet exemple, les masques m₂ et m₃ sont supprimés car leur score de confiance est en dessous du seuil p et correspondent plus vraisemblablement à un segment de bruit.

En effet, la carte d'attention W_{fg} doit normalement avoir des valeurs d'activation élevées pour les zones de l'image correspondant à des objets. En comparant la valeur d'activation moyenne des zones de la carte d'attention W_{fg} correspondant aux objets identifiés dans les pseudo-labels PL à un seuil, cela permet d'éliminer les objets qui ont des valeurs d'activation faible ce qui est significatif de la présence de bruit.

Les masques pour lesquels le score de confiance est supérieur ou égal au seuil p sont par contre utilisés pour superviser, à l'étape 404, l'entrainement du module d'attention ATT au moyen d'une fonction de perte qui vise à associer certaines cartes d'attention parmi les K-1 cartes d'attention W₁,...W_{K-1} à l'un des objets mobiles présents dans les pseudo-labels après filtrage.

Par exemple, une fonction de perte d'entropie croisée binaire est utilisée telle que : ${L}_{BCE} \left(m′,W\right) = - \frac{1}{N} {\sum }_{j = 1}^{N} \left[\left(1+{score}_{m ′}\right)m′\left(j\right)log\left(W\left(j\right)\right)+\left(1-m′\left(j\right)\right)log\left(\begin{matrix}1 - \\ W \left(i\right)\end{matrix}\right)\right]$

m' désigne un masque d'objet retenu après filtrage et W désigne l'une des K-1 cartes d'attention. Autrement dit, chaque masque d'objet filtré m' est utilisé pour superviser l'une des cartes d'attention W du module d'attention. D'autres fonctions de perte peuvent être envisagées sans sortir du cadre de l'invention.

Le score des masques filtrés est pris en compte dans le calcul de la fonction de perte de sorte à donner un poids plus important aux objets ayant une confiance plus élevée.

Ainsi, le filtrage du bruit dans les pseudo-labels permet de rendre plus robuste au bruit le modèle en éliminant efficacement des segments non pertinents dans les sorties du modèle.

L'élimination des segments de bruit permet également de rendre possible l'application d'un mécanisme de distillation pour la découverte d'objets basée sur un modèle de type « slot attention ».

La carte d'attention du premier-plan peut être déterminée par supervision au moyen d'une fonction de perte d'entropie croisée binaire du type :
${L}_{fg / bg} \left(m{′}_{fg},{W}_{fg}\right) = \frac{1}{N} {\sum }_{j = 1}^{N} \left[-m{′}_{fg}\left(j\right)log\left({W}_{fg}\left(j\right)\right)+{αW}_{fg}\left(j\right)\right]$
m'_{fg} est la somme de l'ensemble des masques d'objets m' après filtrage,
α est un coefficient de régularisation.

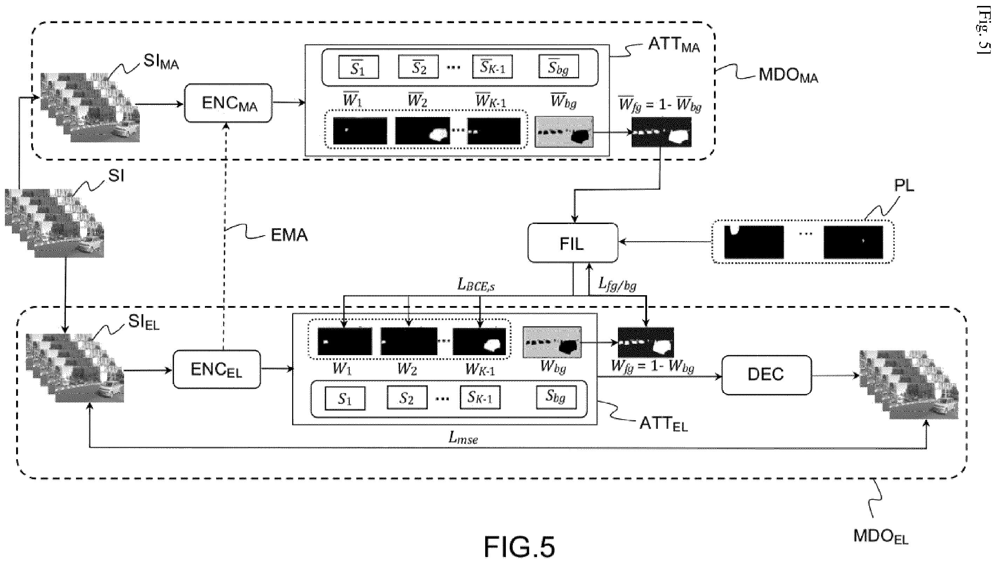

Pour cela, un deuxième mode de réalisation de l'invention est illustré à la figure 5.

Dans ce deuxième mode de réalisation, un mécanisme de transfert d'apprentissage par distillation est mis en œuvre sur la base d'un principe général décrit notamment dans la référence [5].

Le processus de distillation implique l'utilisation de deux modèles de même architecture : un modèle maitre MDO_{MA} et un modèle élève MDO_{EL}. Chacun des deux modèles comporte ainsi un encodeur ENC_{EL},ENC_{MA} et un module d'attention ATT_{EL},ATT_{MA} tels que décrits précédemment. Seul le décodeur DEC du modèle élève est utilisé dans le processus d'apprentissage par distillation. Le modèle maitre comporte un décodeur similaire mais il ne participe à aucune fonction ou étape pendant l'apprentissage.

Chacun des deux modèles reçoit en entrée une version transformée différente de la séquence d'images afin d'éviter qu'ils ne produisent les mêmes résultats entrainant un biais d'auto-confirmation. Les transformations appliquées à la séquence d'image SI sont par exemple : des transformations des intensités (couleurs) ou des transformations géométriques telles qu'une opération de recadrage ou de zoom. Les transformations géométriques sont également appliquées de façon identique aux pseudo-labels PL. De façon générale, et tel que cela est connu du principe de distillation, les transformations appliquées au modèle maitre sont d'intensités plus faibles et/ou en nombre moins importants que celles appliquées au modèle élève car il est souhaitable que le modèle maitre bénéficie d'une entrée plus proche de l'original que le modèle élève. Par exemple, les mêmes transformations géométriques sont appliquées aux deux modèles et aux pseudo-labels PL, par contre les transformations visuelles sur les intensités ne sont appliquées qu'aux entrées du modèle élève.

Les poids du modèle élève sont mis à jour par un mécanisme de rétro-propagation du gradient de manière à reconstruire la séquence reçue en entrée du modèle élève SI_{EL} de la façon décrite ci-dessus pour le premier mode de réalisation. Par contre, les poids du modèle maitre sont calculés comme la moyenne mobile des poids du modèle élève. Le modèle maitre devient ainsi une version plus stable du modèle élève et produit des résultats plus fiables qui sont utilisés pour superviser le modèle élève.

Tel que cela est détaillé dans la référence [5], le mécanisme de distillation consiste à transférer ou distiller la connaissance du modèle maitre dans le modèle élève. Le type de supervision dépend de la tâche traitée. Dans le cas de la détection d'objets de façon supervisée, la supervision consiste à aligner les sorties du modèle élève avec les prédictions du modèle maitre les plus fiables. Un jeu de données externe est utilisé dans ce cas pour superviser le modèle élève afin d'éviter la divergence du système maitre-élève. La distillation peut être précédée d'une phase de préparation appelée « burn-in » lors de laquelle le modèle est entrainé à partir de labels externes avant d'être dupliqué en un modèle maitre et un modèle élève. L'intérêt de cette phase de préparation est d'offrir une initialisation qui aide les deux modèles à converger vers une meilleure solution.

Dans le cas de l'invention, les prédictions du modèle maitre MDO_{MA} sont des cartes d'attention notées *W̅*₁*, ... , W̅*_{*K-*1}*, W̅_{bg},*

Dans le deuxième mode de réalisation de l'invention décrit à la figure 5, c'est la carte d'attention du premier plan *W̅_{fg} = 1 - W̅_{bg},* du modèle maitre MDO_{MA} qui est utilisée pour réaliser l'opération de filtrage FIL des pseudo-labels.

Un avantage de ce mode de réalisation réside dans le bénéfice du mécanisme de distillation en utilisant la carte d'attention du premier plan apprise par le modèle maitre qui est plus précise que celle du modèle élève.

La méthode de filtrage FIL décrite à la figure 4 reste identique.

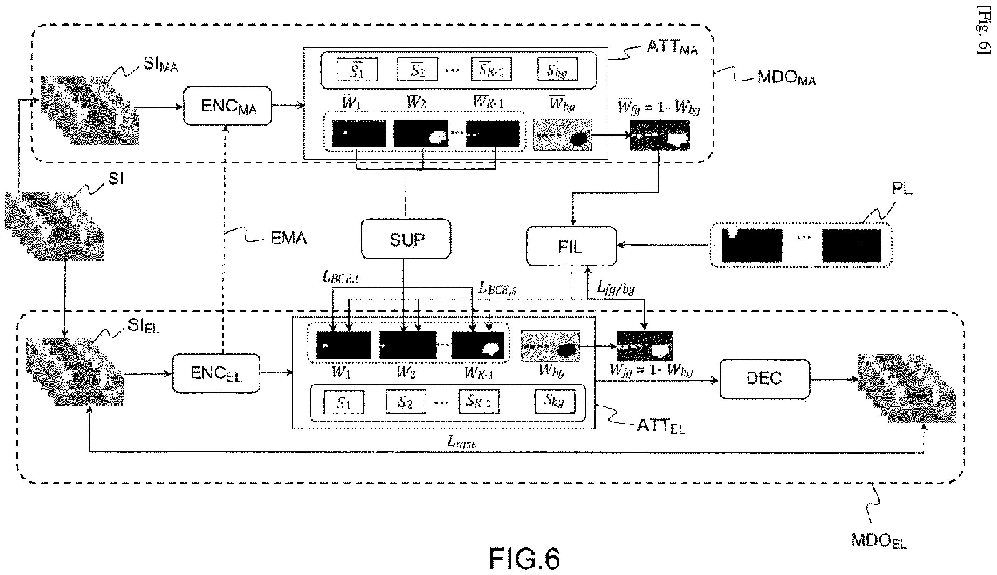

La figure 6 représente un troisième mode de réalisation de l'invention comprenant en outre un module SUP de supervision pour connecter les modules d'attention respectifs ATT_{EL},ATT_{MA} des deux modèles MDO_{EL}, MDO_{MA}.

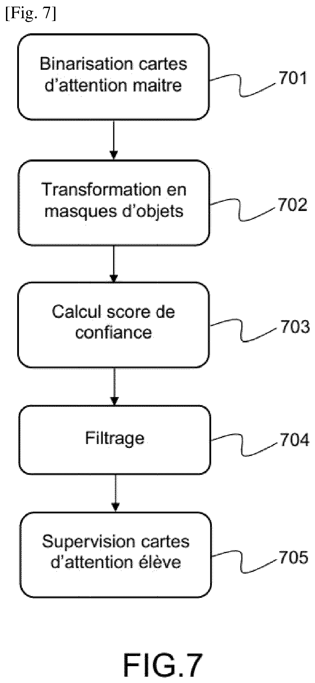

Le module de supervision SUP implémente les étapes de la méthode de supervision décrite à la figure 7.

A l'étape 701, les cartes d'attention *W̅*₁*, ... , W̅*_{*K-*1}*,* du modèle maitre sont transformées en cartes binaires par exemple en utilisant l'opérateur argmax. Les valeurs de chaque carte d'attention qui correspondent à des maxima locaux sont mises à 1 tandis que les autres valeurs sont mises à 0. On obtient alors K-1 masques binaires.

Chacun de ces masques peut contenir plusieurs régions connexes, c'est-à-dire des ensembles de pixels adjacents ayant comme valeur 1. A l'étape 702, on considère chaque région connexe comme correspondant à un objet distinct. Lorsqu'un masque comporte plusieurs objets, ils sont séparés en d'autant de masques distincts. Ainsi, les K-1 masques binaires sont transformés en C masques d'objets où C correspond au nombre d'objets distincts.

L'ensemble obtenu est ensuite filtré sur la base de la confiance du modèle pour retenir uniquement les prédictions du modèle maitre les plus fiables.

Pour cela, à l'étape 703, on calcule un score de confiance pour chaque masque d'objet comme la moyenne des activations de la carte d'attention du modèle maitre duquel est extrait le masque d'objet, aux positions spatiales de la carte correspondant aux positions spatiales des valeurs à 1 du masque d'objet.

Le score de confiance peut être représenté par la formule suivante, où c désigne un masque d'objet :
${score}_{c} = \frac{1}{{\sum }_{j = 1}^{N} c \left(j\right)} {\sum }_{j = 1}^{N} \overline{W} \left(j\right) ⊙ c \left(j\right)$

A l'étape 704, les masques d'objets c dont le score de confiance est supérieur à un seuil s prédéfini sont conservés pour la supervision des cartes d'attention du modèle élève, les autres objets sont supprimés. Ainsi, seules les prédictions les plus fiables du modèle maitre sont retenues. Le seuil s a une valeur comprise entre 0 et 1, de préférence une valeur proche de 1 pour filtre efficacement les prédictions les moins fiables, par exemple une valeur égale à 0.9.

Enfin à l'étape 705, l'entrainement du module d'attention élève ATT_{EL} est supervisé au moyen d'une fonction de perte qui vise à associer chaque carte d'attention W₁,...W_{K-1} à l'un des objets retenus après filtrage.

Par exemple, une fonction de perte d'entropie croisée binaire est utilisée telle que :
$L {′}_{BCE} \left(c, W\right) = - \frac{1}{N} {\sum }_{j = 1}^{N} \left[\left(1+{score}_{c}\right)c\left(j\right)log\left(W\left(j\right)\right)+\left(1-c\left(j\right)\right)log\left(1-W\left(i\right)\right)\right]$

Le score des masques d'objets est pris en compte dans le calcul de la fonction de perte de sorte à donner un poids plus important aux objets ayant une confiance plus élevée.

Ainsi, chaque carte d'attention du modèle maitre donne lieu à plusieurs masques d'objets qui sont distribués entre les cartes d'attention du modèle élève de sorte que chaque carte d'attention du modèle élève se spécialise vers un seul objet.

Un avantage à cette supervision SUP est la prise en compte d'objets statiques qui sont identifiés dans les cartes d'attention du modèle maitre alors qu'ils sont absents des pseudo-labels PL qui ne visent que les objets mobiles.

La distribution de chaque carte d'attention du modèle maitre vers plusieurs cartes d'attention du modèle élève permet d'éviter un biais sémantique qui existerait dans une configuration plus naïve où une association directe serait faite entre une carte du modèle maitre et une carte du modèle élève.

Dans un mode de réalisation de l'invention, les cartes d'attention du modèle élève sont supervisés au moyen d'une combinaison des deux fonctions de perte *L_{BCE}*(*m',W*) et *L'_{BCE}*(*c, W*)*,* par exemple la somme de ces deux fonctions éventuellement pondérée par des coefficients choisis en fonction de l'importance respective à accorder à la supervision par le modèle maitre ou à la supervision par les pseudo-labels provenant d'une source externe. Les coefficients de pondération peuvent être appliqués de façon dynamique de sorte à accorder progressivement plus de poids à la supervision réalisée par le modèle maitre au cours de l'entrainement. Une telle approche permet de renforcer la robustesse du modèle élève en atténuant l'impact des erreurs issues de la supervision externe.

Dans une variante de réalisation de l'invention, l'information de mouvement issue d'une séquence de flux optique peut être remplacée ou associée à une autre source de pseudo-labels. Par exemple, les pseudo-labels peuvent être générés par des algorithmes de découverte d'objets dans des images à partir de caractéristiques de modèles pré-entrainés comme cela est présenté dans la référence [6].

Une fois le modèle élève entrainé il peut être utilisé en inférence sur de nouvelles données images pour localiser des objets dans la scène capturée.

Le modèle entrainé est exécuté sur une séquence d'images et délivre en sortie un masque de localisation d'objets dans la scène pour chaque objet. Le masque de localisation d'objets est déterminé par le module d'attention via les cartes d'attention. Chaque carte d'attention correspond à un objet distinct. Un masque de localisation d'objets est obtenu, par exemple, en binarisant les valeurs d'activation d'une carte d'attention. Autrement dit les valeurs de la carte d'attention supérieures à un seuil d'activation sont mises à 1 dans le masque de localisation d'objets, tandis que les autres valeurs sont mises à 0.

L'invention présente plusieurs avantages par rapport aux techniques de l'art antérieur.

Le troisième mode de réalisation de l'invention permet une meilleure localisation des objets statiques en ajoutant une contrainte de localisation des objets statiques découverts via le module de supervision SUP qui réalise la supervision du module d'attention élève à partir du module d'attention maitre. A l'inverse, les techniques de découverte d'objets de l'art antérieur basées sur des approches « slot attention » ne contraignent pas le modèle à la découverte d'objets statiques ce qui entraine une performance de localisation limitée de ces objets statiques.

Le troisième mode de réalisation de l'invention permet également la localisation d'un plus grand nombre d'objets, notamment ceux qui sont difficiles à capturer via les méthodes de l'art antérieur. En effet, les méthodes qui sont basées uniquement sur une supervision via des pseudo-labels obtenus par une source externe dépendent de la qualité de ces pseudo-labels qui sont le plus souvent incomplets. L'invention permet de compléter itérativement les labels de supervision au fil de l'entrainement grâce au processus de distillation.

L'invention permet également de mieux distinguer les objets mobiles des segments de bruit dans les pseudo-labels grâce à un mécanisme de filtrage automatique qui cible spécifiquement le bruit et qui permet d'éliminer efficacement les segments non pertinents dans les sorties du modèle.

Les méthodes de l'art antérieur se fient exclusivement aux segments issus d'une séquence de flux optique pour la supervision du modèle, ce qui présente des limites, notamment lorsque des objets proches se déplacent à la même vitesse et direction, entraînant des erreurs de fusion. A l'inverse, le troisième mode de réalisation de l'invention utilise deux sources de supervision (les segments d'objets mobiles et les prédictions du modèle maître), permettant la régularisation (correction) des erreurs dans la première source grâce aux prédictions du modèle maître qui, en apprenant à généraliser, devient plus robuste à ces erreurs. Cela se traduit par une meilleure séparation des objets proches.

L'invention peut être mise en œuvre en tant que programme d'ordinateur comportant des instructions pour son exécution. Le programme d'ordinateur peut être enregistré sur un support d'enregistrement lisible par un processeur.

La référence à un programme d'ordinateur qui, lorsqu'il est exécuté, effectue l'une quelconque des fonctions décrites précédemment, ne se limite pas à un programme d'application s'exécutant sur un ordinateur hôte unique. Au contraire, les termes programme d'ordinateur et logiciel sont utilisés ici dans un sens général pour faire référence à tout type de code informatique (par exemple, un logiciel d'application, un micro logiciel, un microcode, ou toute autre forme d'instruction d'ordinateur) qui peut être utilisé pour programmer un ou plusieurs processeurs pour mettre en œuvre des aspects des techniques décrites ici. Les moyens ou ressources informatiques peuvent notamment être distribués ("*Cloud computing"*), éventuellement selon des technologies de pair-à-pair. Le code logiciel peut être exécuté sur n'importe quel processeur approprié (par exemple, un microprocesseur) ou cœur de processeur ou un ensemble de processeurs, qu'ils soient prévus dans un dispositif de calcul unique ou répartis entre plusieurs dispositifs de calcul (par exemple tels qu'éventuellement accessibles dans l'environnement du dispositif). Le code exécutable de chaque programme permettant au dispositif programmable de mettre en œuvre les processus selon l'invention, peut être stocké, par exemple, dans le disque dur ou en mémoire morte. De manière générale, le ou les programmes pourront être chargés dans un des moyens de stockage du dispositif avant d'être exécutés. L'unité centrale peut commander et diriger l'exécution des instructions ou portions de code logiciel du ou des programmes selon l'invention, instructions qui sont stockées dans le disque dur ou dans la mémoire morte ou bien dans les autres éléments de stockage précités.

L'invention peut être implémentée sur un dispositif de calcul basé, par exemple, sur un processeur embarqué. Le processeur peut être un processeur générique, un processeur spécifique, un circuit intégré propre à une application (connu aussi sous le nom anglais d'ASIC pour « Application-Specific Integrated Circuit ») ou un réseau de portes programmables in situ (connu aussi sous le nom anglais de FPGA pour « Field-Programmable Gate Array »). Le dispositif de calcul peut utiliser un ou plusieurs circuits électroniques dédiés ou un circuit à usage général. La technique de l'invention peut se réaliser sur une machine de calcul reprogrammable (un processeur ou un micro-contrôleur par exemple) exécutant un programme comprenant une séquence d'instructions, ou sur une machine de calcul dédiée (par exemple un ensemble de portes logiques comme un FPGA ou un ASIC, ou tout autre module matériel).

### Références

[1] Bao, Zhipeng et al. "Discovering Objects that Can Move." 2022 IEEE/CVF Conference on Computer Vision and Pattern Recognition (CVPR) (2022): 11779-11788.
[2] Bao, Zhipeng, et al. "Object Discovery from Motion-Guided Tokens." Proceedings of the IEEE/CVF Conference on Computer Vision and Pattern Recognition. 2023.
[3] Locatello, Francesco, et al. "Object-centric learning with slot attention." Advances in Neural Information Processing Systems 33 (2020): 11525-11538.
[4] Kara, Sandra, et al. "The Background Also Matters: Background-Aware Motion-Guided Objects Discovery." Proceedings of the IEEE/CVF Winter Conference on Applications of Computer Vision. 2024.
[5] Liu, Yen-Cheng, et al. "Unbiased teacher for semi-supervised object detection." arXiv preprint arXiv:2102.09480 (2021).
[6] Siméoni, Oriane, et al. "Localizing objects with self-supervised transformers and no labels." arXiv preprint arXiv:2109.14279 (2021).

## Revendications

1. Méthode, mise en œuvre par ordinateur, d'entrainement d'un modèle automatique (MDO,MDO_{EL}) de découverte d'objets dans une séquence d'images (SI) d'entrée, le modèle comprenant :
- un encodeur (ENC,ENC_{EL}) pour encoder chaque image en un premier vecteur de caractéristiques,
- un module d'attention (ATT,ATT_{EL}) configuré pour transformer le premier vecteur de caractéristiques en une pluralité de vecteurs de caractéristiques appelé slots (S₁,..S_{K-1}), l'état d'un slot étant déterminé à partir d'un calcul de similarité entre le premier vecteur de caractéristiques et chaque slot dans son état courant, chaque calcul de similarité définissant une carte d'attention (W₁,..W_{K-1}),
- un décodeur (DEC) pour décoder l'ensemble des slots de manière à reconstruire une séquence d'images correspondant à la séquence d'images (SI) d'entrée,
- l'apprentissage des cartes d'attention (W₁,..W_{K-1}) étant supervisé (404) par un ensemble de masques binaires de découverte d'objets mobiles produits par une source externe, dits pseudo-labels (PL), de sorte que chaque carte d'attention (W₁,..W_{K-1}) est activée dans une zone correspondant à un objet distinct contenu dans les pseudo-labels (PL), une carte d'attention supplémentaire (W_{bg}) est activée dans une zone correspondant à l'arrière-plan de l'image,
- les pseudo-labels (PL) étant filtrés (FIL) au moyen des étapes de : déterminer (401) une carte d'attention du premier plan de l'image (W_{fg}) comme étant le négatif de la carte d'attention supplémentaire (W_{bg}), calculer (402) un score de confiance à partir de la moyenne des valeurs de la carte d'attention (W_{fg}) du premier plan de l'image aux positions de chaque objet mobile présent dans un pseudo-label, filtrer (403) les objets mobiles des pseudo-labels pour lesquels le score de confiance est inférieur à un seuil prédéfini,

2. Méthode d'entrainement d'un modèle automatique de découverte d'objets selon la revendication 1 dans laquelle la carte d'attention (W_{fg}) du premier plan de l'image est déterminée à partir de la carte d'attention (W_{bg}) de l'arrière-plan de l'image du module d'attention du modèle (ATT,ATT_{EL}).

3. Méthode d'entrainement d'un modèle automatique de découverte d'objets selon la revendication 1 dans laquelle ledit modèle est un modèle élève (MDO_{EL}) entrainé au moins partiellement via un mécanisme de transfert d'apprentissage par distillation depuis un modèle maitre (MDO_{MA}), le modèle maitre (MDO_{MA}) comprenant un encodeur (ENC_{MA}) et un module d'attention (ATT_{MA}), la carte d'attention (W_{fg}) du premier plan de l'image du modèle élève étant déterminée à partir de la carte d'attention de l'arrière-plan de l'image du module d'attention du modèle maitre.

4. Méthode d'entrainement d'un modèle automatique de découverte d'objets selon la revendication 3 dans laquelle l'apprentissage des cartes d'attention du modèle élève est supervisé par les cartes d'attention du modèle maitre de sorte que chaque carte d'attention est activée dans une zone correspondant à un objet distinct découvert dans les cartes d'attention du modèle maitre.

5. Méthode d'entrainement d'un modèle automatique de découverte d'objets selon la revendication 4 dans laquelle l'apprentissage des cartes d'attention du modèle élève comprend les étapes de :
- Binariser (701) chaque carte d'attention du modèle maitre,
- Déterminer (702) l'ensemble des régions connexes dans l'ensemble des cartes d'attention binarisées, chaque région connexe correspondant à un objet distinct découvert

6. Méthode d'entrainement d'un modèle automatique de découverte d'objets selon la revendication 5 dans laquelle l'apprentissage des cartes d'attention du modèle élève comprend en outre les étapes de :
- Calculer (703) un score de confiance pour chaque objet distinct découvert comme étant égal à la valeur moyenne des activations dudit objet dans chaque carte d'attention du modèle maitre,
- Filtrer (704) les objets dont le score de confiance est inférieur à un seuil prédéterminé

7. Méthode d'entrainement d'un modèle automatique de découverte d'objets selon la revendication 6 dans laquelle la supervision (705) des cartes d'attention du modèle élève est au moins réalisée au moyen d'une première fonction de perte d'entropie croisée appliquée entre les cartes d'attention du modèle élève et les objets déterminés à partir des cartes d'attention du modèle maitre pondérés par leur score de confiance.

8. Méthode d'entrainement d'un modèle automatique de découverte d'objets selon l'une quelconque des revendications précédentes dans laquelle la supervision (404, 705) des cartes d'attention du modèle est au moins réalisée au moyen d'une seconde fonction de perte d'entropie croisée appliquée entre les cartes d'attention du modèle et les objets des pseudo-labels pondérés par leur score de confiance.

9. Méthode d'entrainement d'un modèle automatique de découverte d'objets selon l'une quelconque des revendications précédentes dans laquelle les pseudo-labels sont obtenus à partir de la séquence d'images et d'une séquence de flux optique associée.

10. Méthode, mise en œuvre par ordinateur de découverte d'objets dans une séquence d'images comprenant les étapes de :
- Recevoir une séquence d'images,
- Exécuter le modèle automatique de découverte d'objets entrainé au moyen de la méthode selon l'une quelconque des revendications précédentes pour la séquence d'images de manière à générer au moins un masque de localisation d'un objet dans la séquence d'images, chaque masque de localisation étant obtenu à partir d'une carte d'attention.

11. Programme d'ordinateur comportant des instructions pour l'exécution de la méthode selon l'une quelconque des revendications 1 à 10, lorsque le programme est exécuté par un processeur.

12. Support d'enregistrement lisible par un processeur sur lequel est enregistré un programme comportant des instructions pour l'exécution de la méthode selon l'une quelconque des revendications 1 à 10, lorsque le programme est exécuté par un processeur.

## Patentansprüche

1. Verfahren, das von einem Computer durchgeführt wird, zum Trainieren eines automatischen Modells (MDO,MDO_{EL}) zur Entdeckung von Objekten in einer Eingangs-Bildsequenz (SI), wobei das Modell umfasst:
einen Codierer (ENC,ENC_{EL}) zum Codieren jedes Bildes in einem ersten Eigenschaftsvektor,
- ein Aufmerksamkeitsmodul (ATTATT_{EL}), das konfiguriert ist, um den ersten Eigenschaftsvektor in eine Vielzahl von als Slots bezeichnete Eigenschaftsvektoren (S₁,..S_{K-1}) umzuwandeln, wobei der Zustand eines Slots ausgehend von einer Berechnung der Ähnlichkeit zwischen dem ersten Eigenschaftsvektor und jedem Slot in seinem aktuellen Zustand bestimmt wird, wobei jede Berechnung der Ähnlichkeit eine Aufmerksamkeitskarte (W₁,..W_{K-1}) definiert,
- einen Decoder (DEC), um die Gesamtheit der Slots derart zu decodieren, dass eine der Eingangs-Bildsequenz (SI) entsprechende Bildsequenz rekonstruiert wird,
- wobei das Erlernen der Aufmerksamkeitskarten (W₁,..W_{K-1}) von einer Gesamtheit von binären Masken zur Entdeckung von mobilen Objekten, als Pseudo-Markierungen (PL) bezeichnet, die von einer externe Quelle erzeugt werden, überwacht wird (404), sodass jede Aufmerksamkeitskarte (W₁,..W_{K-1}) in einem Bereich aktiviert wird, der einem verschiedenen Objekt entspricht, das in den Pseudo-Markierungen (PL) enthalten ist, wobei eine zusätzliche Aufmerksamkeitskarte (W_{bg}) in einem Bereich aktiviert wird, der einem Hintergrund des Bildes entspricht,
wobei die Pseudo-Markierungen (PL) mithilfe der folgenden Schritte gefiltert werden (FIL): Bestimmen (401) einer Aufmerksamkeitskarte des Vordergrundes des Bildes (W_{fg}) als Negativbild der zusätzlichen Aufmerksamkeitskarte (W_{bg}), Berechnen (402) eines Vertrauenswerts ausgehend von dem Durchschnitt der Werte der Aufmerksamkeitskarte (W_{fg}) des Vordergrundes des Bildes an den Positionen jedes mobilen Objekts, das in einer Pseudo-Markierung vorhanden ist, Filtern (403) der mobilen Objekte der Pseudo-Markierungen, für die der Vertrauenswert kleiner ist als ein vorbestimmter Schwellenwert.

2. Verfahren zum Trainieren eines automatischen Modells zur Entdeckung von Objekten nach Anspruch 1, wobei die Aufmerksamkeitskarte (W_{fg}) des Vordergrundes des Bildes ausgehend von der Aufmerksamkeitskarte (W_{bg}) des Hintergrundes des Bildes des Aufmerksamkeitsmoduls des Modells (ATT, ATT_{EL}) bestimmt wird.

3. Verfahren zum Trainieren eines automatischen Modells zur Entdeckung von Objekten nach Anspruch 1, wobei das Modell ein Schülermodell (MDO_{EL}) ist, das zumindest teilweise über einen Lernübertragungsmechanismus durch Destillation ausgehend von einem Lehrermodell (MDO_{MA}) trainiert wird, wobei das Lehrermodell (MDO_{MA}) einen Codierer (ENC_{MA}) und ein Aufmerksamkeitsmodul (ATT_{MA}) umfasst, wobei die Aufmerksamkeitskarte (W_{fg}) des Vordergrundes des Bildes des Schülermodells ausgehend von der Aufmerksamkeitskarte des Hintergrundes des Bildes des Aufmerksamkeitsmoduls des Lehrermodells bestimmt wird.

4. Verfahren zum Trainieren eines automatischen Modells zur Entdeckung von Objekten nach Anspruch 3, wobei das Erlernen der Aufmerksamkeitskarten des Schülermodells von den Aufmerksamkeitskarten des Lehrermodells derart überwacht wird, dass jede Aufmerksamkeitskarte in einem Bereich aktiviert wird, der einem verschiedenen Objekt entspricht, das in den Aufmerksamkeitskarten des Lehrermodells entdeckt wird.

5. Verfahren zum Trainieren eines automatischen Modells zur Entdeckung von Objekten nach Anspruch 4, wobei das Erlernen der Aufmerksamkeitskarten des Schülermodells die folgenden Schritte umfasst:
- Binarisieren (701) jeder Aufmerksamkeitskarte des Lehrermodells,
- Bestimmen (702) der Gesamtheit der zusammenhängenden Bereiche in der Gesamtheit der binarisierten Aufmerksamkeitskarten, wobei jeder zusammenhängende Bereich einem verschiedenen entdeckten Objekt entspricht.

6. Verfahren zum Trainieren eines automatischen Modells zur Entdeckung von Objekten nach Anspruch 5, wobei das Erlernen der Aufmerksamkeitskarten des Schülermodells weiter die folgenden Schritte umfasst:
- Berechnen (703) eines Vertrauenswerts für jedes verschiedene entdeckte Objekt, das dem Durchschnittswert der Aktivierungen des Objekts in jeder Aufmerksamkeitskarte des Lehrermodells entspricht,
- Filtern (704) der Objekte, deren Vertrauenswert kleiner ist als ein vorbestimmter Schwellenwert.

7. Verfahren zum Trainieren eines automatischen Modells zur Entdeckung von Objekten nach Anspruch 6, wobei die Überwachung (705) der Aufmerksamkeitskarten des Schülermodells zumindest teilweise mithilfe einer ersten Kreuz-Entropieverlustfunktion durchgeführt wird, die zwischen den Aufmerksamkeitskarten des Schülermodells und den Objekten angewandt wird, die ausgehend von den Aufmerksamkeitskarten des Lehrermodells, gewichtet mit ihrem Vertrauenswert, bestimmt werden.

8. Verfahren zum Trainieren eines automatischen Modells zur Entdeckung von Objekten nach einem der vorstehenden Ansprüche, wobei die Überwachung (404, 705) der Aufmerksamkeitskarten des Modells zumindest teilweise mithilfe einer zweiten Kreuz-Entropieverlustfunktion durchgeführt wird, die zwischen den Aufmerksamkeitskarten des Modells und den Objekten der Pseudo-Markierungen, gewichtet mit ihrem Vertrauenswert, angewandt wird.

9. Verfahren zum Trainieren eines automatischen Modells zur Entdeckung von Objekten nach einem der vorstehenden Ansprüche, wobei die Pseudo-Markierungen ausgehend von der Bildsequenz und einer zugehörigen Sequenz eines optischen Flusses erhalten werden.

10. Verfahren, das von einem Computer durchgeführt wird, zur Entdeckung von Objekten in einer Bildsequenz, umfassend die folgenden Schritte:
Empfangen einer Bildsequenz,
Ausführen des automatischen Modells zur Entdeckung von Objekten, das mithilfe des Verfahrens nach einem der vorstehenden Ansprüche für die Bildsequenz derart trainiert wird, dass mindestens eine Maske zur Lokalisierung eines Objekts in der Bildsequenz erzeugt wird, wobei jede Maske zur Lokalisierung ausgehend von einer Aufmerksamkeitskarte erhalten wird.

11. Computerprogramm, umfassend Anweisungen zur Ausführung des Verfahrens nach einem der Ansprüche 1 bis 10, wenn das Programm durch einen Prozessor ausgeführt wird.

12. Von einem Prozessor lesbarer Aufzeichnungsträger, auf dem ein Programm aufgezeichnet ist, umfassend Anweisungen zur Ausführung des Verfahrens nach einem der Ansprüche 1 bis 10, wenn das Programm durch einen Prozessor ausgeführt wird.

## Claims

1. Computer-implemented method for training an automatic model (MDO, MDO_{EL}) for object detection in an input sequence of images (SI), the model comprising:
- an encoder (ENC, ENC_{EL}) for encoding each image into a first feature vector,
- an attention module (ATT, ATT_{EL}) configured to transform the first feature vector into a plurality of feature vectors called slots (S₁,..S_{K-1}), the state of a slot being determined based on a similarity calculation between the first feature vector and each slot in its current state, each similarity calculation defining an attention map (W₁,..W_{K-1}),
- a decoder (DEC) for decoding the set of slots so as to reconstruct an sequence of images corresponding to the input sequence of images (SI),
- the training of the attention maps (W₁,..W_{K-1}) being supervised (404) by a set of binary masks for detecting moving objects generated by an external source, referred to as pseudo-labels (PL), such that each attention map (W₁,..W_{K-1}) is activated in an area corresponding to a distinct object contained in the pseudo-labels (PL), and an additional attention map (W_{bg}) is activated in an area corresponding to the background of the image,
- the pseudo-labels (PL) being filtered (FIL) by means of the following steps: determining (401) an attention map of the image foreground (W_{fg}) as the negative of the additional attention map (W_{bg}), calculating (402) a confidence score based on the average of the values of the attention map (W_{fg}) of the image foreground at the positions of each moving object present in a pseudo-label, filtering (403) the moving objects from the pseudo-labels for which the confidence score is below a predefined threshold.

2. Method for training an automatic model for object detection according to claim 1, wherein the attention map (W_{fg}) of the image foreground is determined from the attention map (W_{bg}) of the image background by the model attention module (ATT, ATT_{EL}).

3. Method for training an automatic model for object detection according to claim 1, wherein said model is a student model (MDO_{EL}) trained at least partially via a knowledge distillation transfer mechanism from a teacher model (MDO_{MA}), the teacher model (MDO_{MA}) comprising an encoder (ENC_{MA}) and an attention module (ATT_{MA}), wherein the foreground attention map (W_{fg}) of the student model image is determined from the background attention map of the teacher model attention module.

4. Method for training an automatic model for object detection according to claim 3, wherein the training of the attention maps of the student model is supervised by the attention maps of the teacher model such that each attention map is activated in an area corresponding to a distinct object detected in the attention maps of the teacher model.

5. Method for training an automatic model for object detection according to claim 4, wherein the training of the student model attention maps comprises the steps of:
- binarizing (701) each attention map of the teacher model,
- determining (702) the set of connected regions in the set of binarized attention maps, each connected region corresponding to a distinct object detected.

6. Method for training an automatic model for object detection according to claim 5, wherein the training of the student model attention maps further comprises the steps of:
- calculating (703) a confidence score for each distinct object detected, equal to the average value of the activations of said object in each attention map of the teacher model,
- filtering (704) objects whose confidence score is below a predetermined threshold.

7. Method for training an automatic model for object detection according to claim 6, wherein the supervision (705) of the student model attention maps is performed at least by means of a first cross-entropy loss function applied between the student model attention maps and the objects determined from the teacher model attention maps, weighted by their confidence scores.

8. Method for training an automatic model for object detection according to any one of the preceding claims, wherein the supervision (404, 705) of the model attention maps is performed at least by means of a second cross-entropy loss function applied between the model attention maps and the objects of the pseudo-labels weighted by their confidence scores.

9. Method for training an automatic model for object detection according to any of the preceding claims, wherein the pseudo-labels are obtained from the sequence of images and an associated optical flow sequence.

10. Computer-implemented method for object detection in an sequence of images, comprising the steps of:
- receiving a sequence of images,
- executing the automatic object detection model trained using the method according to any of the preceding claims on the sequence of images to generate at least one location mask for an object in the sequence of images, each location mask being derived from an attention map.

11. Computer program comprising instructions for executing the method according to any one of claims 1 to 10, when the program is executed by a processor.

12. Processor-readable storage medium with a program stored thereon comprising instructions for executing the method according to any one of claims 1 to 10, when the program is executed by a processor.
